# EUROPÄISCHE PATENTSCHRIFT

(11) **EP 1 873 046 B1**
(45) Veröffentlichungstag und Bekanntmachung des Hinweises auf die Patenterteilung: **22.04.2009**
(21) Anmeldenummer: 07012677.6
(22) Anmeldetag: 28.06.2007
(51) Int. Cl.: B62J 11/00

(54) **Haltevorrichtung zur Anbringung an einem Motorradlenker**
Mounting device for attaching to motorcycle handlebars
Dispositif de retenue destiné à l'installation sur un guidon de moto

(30) Priorität: 28.06.2006 DE 202006010082 U
(43) Veröffentlichungstag der Anmeldung: 02.01.2008
(73) Patentinhaber: Wunderlich, Erich, 53474 Bad Neuenahr (DE)
(72) Erfinder: Wunderlich, Erich, 53474 Bad Neuenahr (DE)
(74) Vertreter: Walther, Walther & Hinz GbR

(56) Entgegenhaltungen:
- DE-A1- 2 307 826
- DE-U1-8202004 001 60
- US-A- 4 333 132
- US-A- 5 660 363
- US-A1- 2003 038 150
- US-A1- 2004 108 348
- US-A1- 2005 151 040

## Beschreibung

Die vorliegende Erfindung betrifft eine Haltevorrichtung zur Anbringung an einem Motorradlenker gemäß dem Oberbegriff des Anspruches 1, beispielsweise gemäß Dokument US 2005/0151040.

Aus der US 2006/000957 A1 ist eine Haltevorrichtung bekannt, die ein längliches Distanzstück aufweist, wobei an den jeweiligen Enden des Distanzstücks Gelenkkugeln gehalten sind. Dabei ist das Distanzstück im Wesentlichen zweiteilig ausgebildet und mittig mit einer Fixierschraube versehen, so dass die beiden Teile des Distanzstückes an den Gelenkkugeln anliegen und bei angezogener Fixierschraube diese verklemmen.

Die Gelenkkugeln können in den Enden des Distanzstückes relativ frei bewegt werden. Auch sind an den Enden des Distanzstückes Aussparungen vorgesehen, so dass die Gelenkkugel bis zu 90° gegenüber der Längsachse der Haltevorrichtung geschwenkt werden kann. An den jeweiligen Gelenkkugeln sind dann noch Aufnahmen vorgesehen, an die beispielsweise ein Gerät angebracht werden kann.

Die Anbringung einer solchen Haltevorrichtung an einem Motorradlenker gestaltet sich als schwierig, da für die Aufnahme ein sehr aufwendiges Befestigungselement geschaffen werden muss. Viel schwerwiegender ist aber der Umstand, dass über eine einzelne Fixierschraube beide Gelenke fixiert werden. Hierdurch ist es notwendig, die Haltevorrichtung zusammen mit den gehaltenen Geräten und beiden Gelenken mit einer Hand in die richtige Position zu bringen und in dieser Position zu halten, damit man mit der anderen Hand die Fixierschraube anziehen kann. Hierzu gehört schon sehr viel Geschick und Konzentration.

Davon ausgehend liegt der vorliegenden Erfindung die Aufgabe zu Grunde, eine Haltevorrichtung der eingangs genannten Art zu schaffen, bei der die Einstellung der gewünschten Position individuell und einfach erfolgen kann, auch wenn der Bediener Handschuhe trägt.

Als technische Lösung dieser Aufgabe wird erfindungsgemäß eine Haltevorrichtung gemäß den Merkmalen des Anspruches 1 vorgeschlagen. Vorteilhafte Weiterbildungen dieser Haltevorrichtung sind den Unteransprüchen zu entnehmen.

Eine nach dieser technischen Lehre ausgebildete Haltevorrichtung hat den Vorteil, dass das Gelenk, umfassend eine Gelenkhülse einen Kugelkopf, eine Gelenkaufnahme und eine Arretierschraube eine technische Einheit darstellt, wobei dieses Gelenk durch die eigene Arretierschraube fixiert werden kann. Das heißt mit anderen Worten, durch Lösen oder Anziehen der Arretierschraube wird das Gelenk gelöst bzw. arretiert, so dass die Bedienung einfach möglich ist.

In einer bevorzugten Ausführungsform sind am Distanzstück zwei derartige Gelenke vorgesehen, wobei für jedes Gelenk eine separate Arretierschraube vorgesehen ist, so dass die Gelenke einzeln und nacheinander eingestellt werden können. Folglich ist eine zeitgleiche Abstimmung der beiden Gelenke wie im Stand der Technik nicht erforderlich. Durch dieses eigenständige Bedienen eines einzelnen Gelenkes wird eine einfache Bedienung der Haltevorrichtung erreicht.

In einer bevorzugten Ausführungsform ist in der Gelenkaufnahme eine Hinterschneidung ausgebildet, in die die Arretierschraube hineinreicht. Das heißt mit anderen Worten, der an der Gelenkaufnahme anliegende Kugelkopf wird von der Gelenkhülse gegen die Gelenkaufnahme gehalten, während die Arretierschraube die Gelenkhülse durchdringt und bis in die Hinterschneidung hineinreicht. Folglich ist ein axiales Verrücken der Gelenkhülse und somit des Kugelgelenkes nicht mehr möglich, so dass das Gelenk zuverlässig gehalten wird.

Dabei hat es sich als vorteilhaft erwiesen, die Hinterschneidung umlaufend auszubilden, damit das Gelenk um 360° in die Längsachse des Distanzstücks drehbar und in jeder Position durch die Arretierschraube arretiert werden kann.

In einer bevorzugten Ausführungsform ist an der Gelenkaufnahme eine ringförmig umlaufende Kante vorgesehen, an der der Kugelkopf zur Anlage kommt. In einer weiteren bevorzugten Ausführungsform ist am Rand der Gelenkhülse eine umlaufende Anlagekante zur Anlage des Kugelkopfes vorgesehen. In beiden Fällen liegt der Kugelkopf nicht flächenhaft an der Gelenkaufnahme, respektive an der Gelenkhülse an, sondern hat nur linienförmigen Kontakt. Hierdurch wird die Reibung reduziert, damit ein Verschieben des Gelenkes in einfacher Weise möglich ist.

Ein weiterer Vorteil dieser linienförmigen Anlage besteht darin, dass hierdurch die Fertigungstoleranzen nicht so niedrig sein müssen, wie bei einer flächenhaften Anlage. Noch ein weiterer Vorteil besteht darin, dass beim Anziehen der Arretierschraube aufgrund der linienförmigen Anlage des Kugelkopfes eine größere Kraft auf die Gelenkkugel ausgeübt werden kann, was einen besseren Halt im arretierten Zustand bewirkt.

In einer anderen, bevorzugten Ausführungsform ist in der Gelenkaufnahme ein Anschlag zur Anlage der Gelenkhülse vorgesehen, wobei vorteilhafterweise nahe am Anschlag ein O-Ring angeordnet ist. Durch einen solchen Anschlag kann die Gelenkhülse definiert am Distanzstück zur Anlage kommen, so dass sich in dem Übergang von Distanzstück zur Gelenkhülse kein Schmutz oder andere Dinge ansammeln können.

Die Verwendung des O-Rings hat unter anderem den Vorteil, dass hierdurch die Gelenkhülse bereits auf dem Distanzstück gehalten wird, auch wenn die Arretierschraube noch nicht angezogen wird, denn die Spannkraft des O-Rings übt bereits eine gewisse Haltewirkung auf die Gelenkhülse aus.

In einer anderen, bevorzugten Ausführungsform ist im Kugelkopf eine Aufnahme für eine Befestigungsschraube vorgesehen, wobei der Kugelkopf die Befestigungsschraube vorzugsweise passgenau aufnimmt. Dabei wird die Befestigungsschraube im Kugelkopf derart gehalten, dass das freie Gewindeende aus dem Kugelkopf herausragt und zur Befestigung z. B. eine Halterung zur Aufnahme eines Gerätes oder zur Befestigung am Motorradlenker oder dergleichen benutzt werden kann.

Dabei wird beispielsweise die Halterung fest und unveränderlich über die Befestigungsschraube am Kugelkopf befestigt, bevor der Kugelkopf zusammen mit der Gelenkhülse am Distanzstück angebracht wird. Sobald die Halterung über das Kugelgelenk in der gewünschten Position ist, wird dann die Arretierschraube angezogen und das Gelenk in dieser Position arretiert. Dabei kann der Kugelkopf, genauso wie die Gelenkhülse um 360° um die Längsachse des Distanzstückes rotieren und gleichzeitig kann der Kugelkopf gegenüber der Längsachse des Distanzstückes geneigt werden. Durch einen Schlitz in der Gelenkhülse kann der Kugelkopf sogar bis zu 90° gegenüber der Längsachse des Distanzstückes geneigt werden.

Weitere Vorteile der erfindungsgemäßen Haltevorrichtung ergeben sich aus der beigefügten Zeichnung und den nachstehend beschriebenen Ausführungsformen. Ebenso können die vorstehend genannten und die noch weiter ausgeführten Merkmale erfindungsgemäß jeweils einzeln oder in beliebigen Kombinationen miteinander verwendet werden. Die erwähnten Ausführungsformen sind nicht als abschließende Aufzählung zu verstehen, sondern haben vielmehr beispielhaften Charakter. Es zeigen:
- Fig. 1: eine perspektivische Ansicht einer erfindungsgemäßen Haltevorrichtung mit 90° gewinkelten Befestigungsschrauben;
- Fig. 2: eine Explosionsdarstellung der Haltevorrichtung gemäß Fig. 1;
- Fig. 3: eine geschnitten dargestellte Seitenansicht in Explosionsdarstellung der Haltevorrichtung gemäß Fig. 1, mit axial ausgerichteten Befestigungsschrauben;
- Fig. 4: eine geschnitten dargestellte Seitenansicht der Haltevorrichtung gemäß Fig. 1.

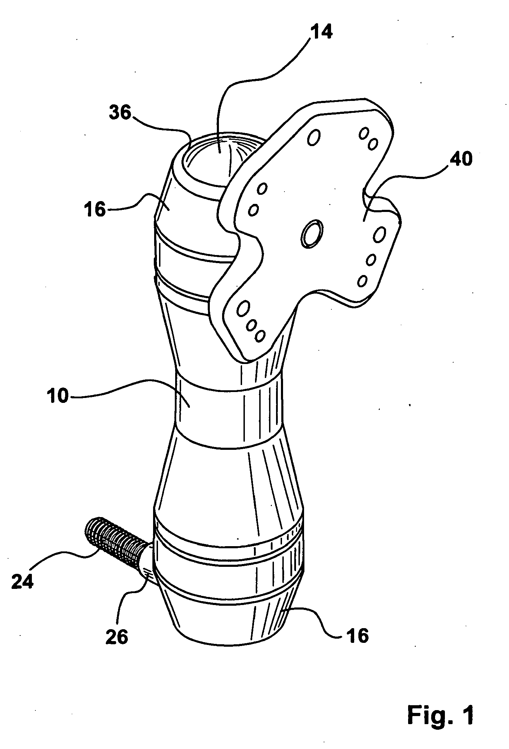

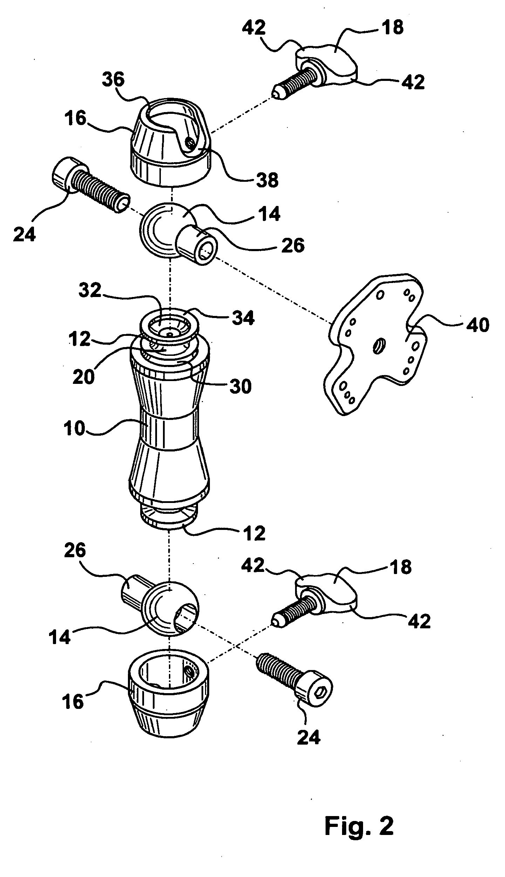

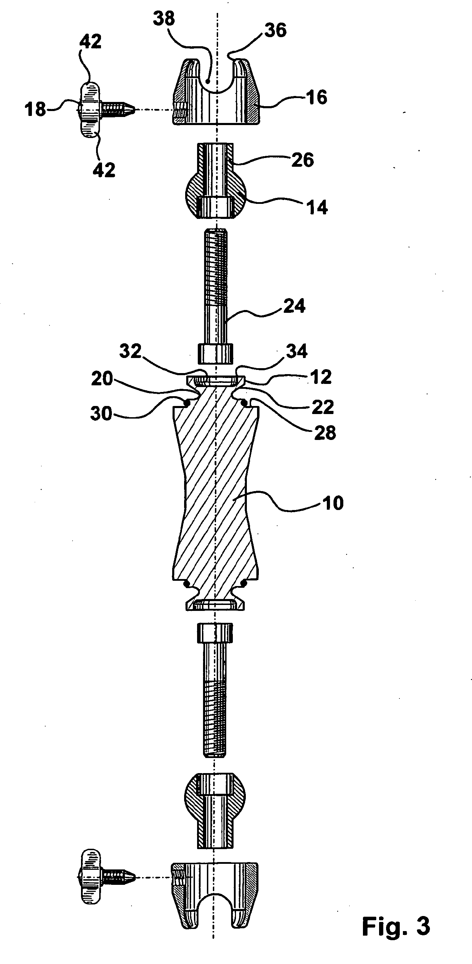

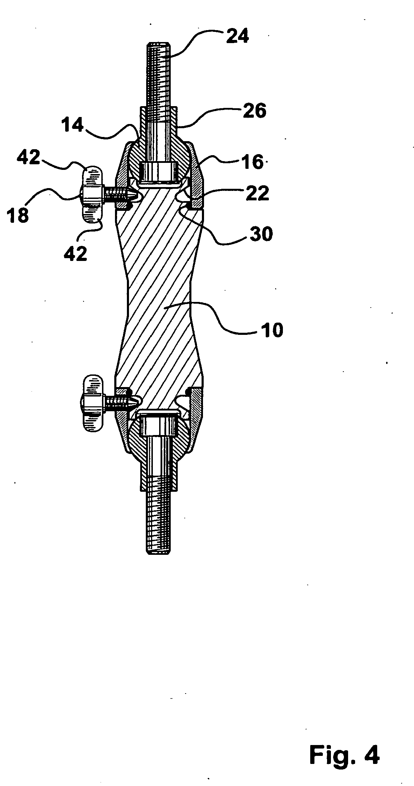

In den Figuren 1 bis 4 ist eine bevorzugte Ausführungsform der erfindungsgemäßen Haltevorrichtung gezeigt. Diese Haltevorrichtung umfasst ein Distanzstück 10 aus massivem Aluminium oder Edelstahl, an dessen beiden Enden je ein Gelenk vorgesehen ist. Beide Gelenke sind identisch aufgebaut, weshalb zur einfacheren Beschreibung nachfolgend lediglich eines dieser beiden Gelenke beschrieben wird.

Zum Gelenk gehört eine Gelenkaufnahme 12, an der ein Kugelkopf 14 zur Anlage kommt, welche von einer Gelenkhülse 16 an der Gelenkaufnahme 12 gehalten wird. In der Gelenkhülse 16 ist in radialer Richtung ein Gewinde eingelassen, in welches eine Arretierschraube 18 einschraubbar ist. Im montierten Zustand reicht die Arretierschraube 18 durch die Gelenkhülse 16 hindurch bis in eine Hinterschneidung 20 in der Gelenkaufnahme 12, um so die Gelenkhülse 16 gegen axiales Verrutschen zu sichern. Gleichzeitig wird über die Arretierschraube 18 und die Gelenkhülse 16 der Kugelkopf 14 gegen die Gelenkaufnahme 12 gedrückt und so in seiner Position arretiert. Um über die Gelenkhülse 16 auf den Kugelkopf 14 eine axial wirkende Kraft auszuüben, besitzt die Gelenkaufnahme 12 im Bereich der Hinterschneidung 20 eine schräg verlaufende Flanke 22, an welche die Arretierschraube 18 anstößt. Je weiter die Arretierschraube 18 in die Gelenkhülse 16 eingeschraubt wird, desto weiter schraubt sie sich entlang der Flanke zum Distanzstück 10 hin und übt so eine axiale Kraft auf die Gelenkhülse 16, respektive auf den Kugelkopf 14 aus.

Der Kugelkopf 14 ist hohl ausgeführt und besitzt eine Aufnahme für eine Befestigungsschraube 24. Dabei sitzt die Befestigungsschraube 24 mit ihrem Schraubenkopf in der Aufnahme und wird dort passgenau gehalten, während der Gewindebolzen der Befestigungsschraube aus dem Kugelkopf 14 herausragt. Zur besseren Fixierung der Befestigungsschraube 24 ist am Kugelkopf 14 eine zylindrischer Vorsprung 26 ausgebildet. Dabei wird die Befestigungsschraube 24, insbesondere deren Schraubenkopf, vollständig im Kugelkopf 14 versenkt, so dass mit Aufnahme des Gewindebolzens kein Teil der Befestigungsschraube aus dem Kugelkopf 14 herausragt.

Am Distanzstück 10 ist im Bereich der Gelenkaufnahme 12 ein schulterartiger Anschlag 28 zur Anlage der Gelenkhülse 16 ausgebildet. Dabei ist nahe dem Anschlag 28 ein O-Ring 30 vorgesehen, der sich radial zwischen die Gelenkaufnahme 12 und die Gelenkhülse 16 drückt. Im vormontierten Zustand übt der O-Ring aufgrund seiner materialbedingten Rückstellkraft eine gewisse Haltefunktion auf die Gelenkhülse 16 aus, so dass diese nicht gleich herunterfällt, bevor die Arretierschraube 18 angezogen ist. Des Weiteren dämpft der O-Ring 30 eventuelle Vibriationen während der Fahrt.

An der dem Kugelkopf 14 zugewandten Seite der Gelenkaufnahme 12 ist eine Aussparung vorgesehen, an dessen oberen Rand eine umlaufende Kante 34 ausgebildet ist. Dabei ist der Kugelkopf 14 so ausgelegt, dass er in jeder beliebigen Position stets mit seiner kugelförmigen Oberfläche an dieser Kante 34 anliegt. Weil die Befestigungsschraube 24 vollständig im Kugelkopf 14 versenkt ist, wird diese die Anlage des Kugelkopfes 14 an der Kante 34 nicht behindern. Dabei hat es sich als vorteilhaft erwiesen, die Kante 34 leicht anzuphasen.

Das Innere der Gelenkhülse 16 ist dabei so ausgelegt, dass der Kugelkopf 14 gut darin aufgenommen werden kann. Dabei ist das Ende der Gelenkhülse 16 offen ausgebildet, damit die Befestigungsschraube 24 zusammen mit dem Vorsprung 26 dort hindurchreichen kann. An diesem äußeren Rand der Gelenkhülse 16 ist eine umlaufende Anlagekante 36 ausgebildet, an der der Kugelkopf 14 zur Anlage kommt.

Sowohl bei der Kante 34, als auch bei der Anlagekante 36 kommt der Kugelkopf 14 nicht flächenhaft, sondern entlang der Kreisbahn auf einer Linie zur Anlage. Durch diese linienförmige Berührung wird die Reibung zwischen dem Kugelkopf 14 und der Gelenkaufnahme 12 bzw. der Gelenkhülse auf ein Minimum reduziert, so dass eine einfache Verstellung des Gelenkes möglich ist. Außerdem brauchen hierbei lediglich diese Kante 34 und die Anlagekante 36 präzise und toleranzarm bearbeitet werden, was zur Reduzierung der Fertigungskosten beiträgt.

An der Gelenkhülse 16 ist an einer Seite ein Schlitz 38 ausgebildet, in dem der Kugelkopf 14 mit seinem Vorsprung 26 einsetzbar ist. In dieser Position ist die Befestigungsschraube 24 in einem Winkel von etwa 90° gegenüber der Längsachse des Distanzstückes 10 angeordnet.

Die Hinterschneidung 20 der Gelenkaufnahme 12 ist umlaufend ausgebildet, so dass die Arretierschraube 18 in jeder beliebigen Position einsetzbar ist. Hierdurch ist eine größtmögliche Bewegungsfreiheit des Gelenkes gewährleistet.

An der Befestigungsschraube 24 ist eine Halterung 40 angebracht, an der wiederum das gewünschte Gerät, beispielsweise ein Telefon, ein Navigationsgerät oder dergleichen anbringbar ist.

Die Benutzung der Haltevorrichtung wird nachfolgend im Detail beschrieben:
Zunächst wird am Lenker des Motorrades ein Befestigungsglied montiert. Dann wird auf dieses Befestigungsglied die Gelenkhülse 16 aufgesetzt, bevor die Befestigungsschraube 24 in den Kugelkopf 14 eingesetzt wird. Dann wird der Kugelkopf 14 mit seinem Vorsprung 26 zusammen mit der Befestigungsschraube 24 durch die Öffnung der Gelenkhülse 16 hindurch gesteckt und in dem Befestigungsglied fest verschraubt. Anschließend wird die Gelenkhülse 16 hochgehoben und das Distanzstück mit der Gelenkaufnahme 12 auf den Kugelkopf 14 aufgesetzt. Zu diesem Zeitpunkt liegt die Gelelenkhülse 16 am Anschlag 28 der Gelenkaufnahme 12 an und wird zumindest provisorisch vom O-Ring 30 gehalten. Nun kann die in einem Gewinde in der Gelenkhülse 16 befindliche Arretierschraube 18 eingeschraubt werden und greift in die Hinterschneidung 20 der Gelenkaufnahme 12 ein. Sobald die Arretierschraube 18 die Flanke 22 erreicht hat, wird über die Flanke 22 und die Arretierschraube 18 und die Gelenkhülse 16 eine axiale Kraft auf den Kugelkopf 14 ausgeübt, so dass diese zwischen der Gelenkhülse 16 und der Gelenkaufnahme 12 verklemmt und in dieser Position arretiert wird. Folglich ist die Haltevorrichtung in ihrem unteren Bereich nunmehr in der endgültigen Stellung arretiert.

Als nächstes wird das zweite Gelenk montiert. Hierzu wird die Befestigungschraube 24 durch den Kugelkopf 14 hindurch gesteckt, so dass der Gewindebolzen aus dem Kugelkopf 14 herausragt. Dann wird der Kugelkopf 14 mit der Befestigungsschraube 24 durch die Gelenkhülse 14 hindurch gesteckt, und die Befestigungsschraube 24 wird in der Halterung 40 fest verschraubt. Anschließend die Gelenkhülse 16 auf das Distanzstück 10 aufgesetzt und kommt am Anschlag 28 zur Anlage. Zu diesem Zeitpunkt wird das obere Gelenk zumindest provisorisch durch den O-Ring gehalten. Sodann wird die Arretierschraube 18 über ihr Gewinde in der Gelenkhülse 16 eingeschraubt und greift in die Hinterschneidung 20 der Gelenkaufnahme 12. An der Flanke 22 angekommen, verklemmt die Arretierschraube 18 die Gelenkhülse 16 und den Kugelkopf 14 an der Gelenkaufnahme 12, so dass der Kugelkopf 14 nunmehr in der momentanen Position arretiert ist.

Will der Benutzer nun die Position der Haltevorrichtung verändern, so kann er wahlweise eine der beiden Arretierschrauben 18 lösen und das Gelenk verstellen. Dabei hat die Arretierschraube 18 zwei ausladende Flügel 42, damit die Haltevorrichtung auch mit Handschuhen, wie bei Motorradfahrern üblich, bedient werden kann.

### Bezugszeichenliste:

- 10: Distanzstück
- 12: Gelenkaufnahme
- 14: Kugelkopf
- 16: Gelenkhülse
- 18: Arretierschraube
- 20: Hinterschneidung
- 22: Flanke
- 24: Befestigungsschraube
- 26: Vorsprung
- 28: Anschlag
- 30: O-Ring
- 32: Aussparung
- 34: Kante
- 36: Anlagekante
- 38: Schlitz
- 40: Halterung
- 42: Flügel

## Patentansprüche

1. Haltevorrichtung zur Anbringung an einem Motorradlenker, mit einer an einem Gelenk angebrachten Halterung (40) zur Aufnahme eines Gerätes, wobei das Gelenk an einem Distanzstück (10) gehalten ist, und wobei das Gelenk eine Gelenkhülse (16), einen Kugelkopf (14), und eine am Distanzstück (10) angebrachte Gelenkaufnahme (12) umfasst,
**dadurch gekennzeichnet,**
**dass** das Gelenk eine die Gelenkhülse (16) durchdringende Arretierschraube (18) umfasst.

2. Haltevorrichtung nach Anspruch 1,
**dadurch gekennzeichnet,**
**dass** die Gelenkaufnahme (12) eine Hinterschneidung (20) aufweist, in die die Arretierschraube (18) hineinreicht.

3. Haltevorrichtung nach Anspruch 2,
**dadurch gekennzeichnet,**
**dass** die Hinterschneidung (20) umlaufend ausgebildet ist.

4. Haltevorrichtung nach einem der vorangehenden Ansprüche,
**dadurch gekennzeichnet,**
**dass** die Gelenkaufnahme (12) eine ringförmig umlaufende Kante (34) zur linienförmigen Anlage des Kugelkopfes (14) aufweist.

5. Haltevorrichtung nach einem der vorangehenden Ansprüche,
**dadurch gekennzeichnet,**
**dass** am äußeren Rand der Gelenkhülse (16) eine umlaufende Anlagekante (36) zur linienförmigen Anlage des Kugelkopfes (14) vorgesehen ist.

6. Haltevorrichtung nach einem der vorangehenden Ansprüche,
**dadurch gekennzeichnet,**
**dass** die Gelenkaufnahme (12) einen Anschlag (28) zur Anlage der Gelenkhülse (16) aufweist.

7. Haltevorrichtung nach Anspruch 6,
**dadurch gekennzeichnet,**
**dass** im Anschlag (28) ein O-Ring (30) vorgesehen ist.

8. Haltevorrichtung nach einem der vorangehenden Ansprüche,
**dadurch gekennzeichnet,**
**dass** im Kugelkopf (14) eine Aufnahme für eine Befestigungsschraube (24) vorgesehen ist.

9. Haltevorrichtung nach Anspruch 8,
**dadurch gekennzeichnet,**
**dass** der Kugelkopf (14) die Befestigungsschraube (24) passgenau aufnimmt.

10. Haltevorrichtung nach einem der vorangehenden Ansprüche,
**dadurch gekennzeichnet,**
**dass** in der Gelenkhülse (16) ein Schlitz (38) vorgesehen ist, in den die Befestigungsschraube (24) oder ein am Kugelkopf (14) angebrachter Vorsprung (26) einsetzbar ist.

11. Haltevorrichtung nach einem der vorangehenden Ansprüche,
**dadurch gekennzeichnet,**
**dass** am Distanzstück (10) ein zweites Gelenk vorgesehen ist.

## Claims

1. A holding apparatus for attachment to a motorcycle handlebar with a mount (40) attached to a joint for receiving a device, said joint being retained on a spacer (10), said joint incorporating a joint bushing (16), a spherical head (14) and a joint seat (12) attached to said spacer (10),
**characterized in**
**that** said joint incorporates a stop screw (18) extending through said joint bushing (16).

2. The holding apparatus as set forth in claim 1,
**characterized in**
**that** the joint seat (12) comprises an undercut (20) into which the stop screw (18) extends.

3. The holding apparatus as set forth in claim 2,
**characterized in**
**that** the undercut (20) is configured to be circumferential.

4. The holding apparatus as set forth in any one of the afore mentioned claims,
**characterized in**
**that** the joint seat (12) comprises an annular circumferential edge (34) for linear abutment of the spherical head (14).

5. The holding apparatus as set forth in any one of the afore mentioned claims,
**characterized in**
**that** a circumferential abutment edge (36) for linear abutment of the spherical head (14) is provided on the outer edge of the joint bushing

6. The holding apparatus as set forth in any one of the afore mentioned claims,
**characterized in**
**that** the joint seat (12) comprises a limit stop (28) for abutment of the joint bushing (16).

7. The holding apparatus as set forth in claim 6,
**characterized in**
**that** an O-ring (30) is provided in the limit stop (28).

8. The holding apparatus as set forth in any one of the afore mentioned claims,
**characterized in**
**that** a seat for a fastening screw (24) is provided in the spherical head (14).

9. The holding apparatus as set forth in claim 8,
**characterized in**
**that** the spherical head (14) registers with and receives the fastening screw (24).

10. The holding apparatus as set forth in any one of the afore mentioned claims,
**characterized in**
**that** in the joint bushing (16) there is provided a slot (38) for insertion of the fastening screw (24) or of a projection (26) attached to the spherical head (14).

11. The holding apparatus as set forth in any one of the afore mentioned claims,
**characterized in**
**that** a second joint is provided on the spacer (10).

## Revendications

1. Dispositif de retenue apte à être monté sur un guidon de moto, avec une fixation (40) montée sur une articulation et destinée à recevoir un instrument, l'articulation étant retenue sur une pièce d'écartement (10) et l'articulation comprenant une gaine d'articulation (16), une tête sphérique (14) et un logement (12) pour l'articulation monté sur la pièce d'écartement (10),
**caractérisé en ce**
**que** l'articulation comprend une vis d'arrêt (18) traversant la gaine (16) de l'articulation.

2. Dispositif de retenue selon la revendication 1,
**caractérisé en ce**
**que** le logement (12) pour l'articulation comporte une contre-dépouille (20) dans laquelle fait saillie la vis d'arrêt (18).

3. Dispositif de retenue selon la revendication 2,
**caractérisé en ce**
**que** la contre-dépouille (20) est conformée pour être circonférentielle.

4. Dispositif de retenue selon l'une quelconque des revendications précédentes,
**caractérisé en ce**
**que** le logement (12) pour l'articulation comporte une arête circonférentielle annulaire (34) destinée à servir d'appui linéaire à la tête sphérique (14).

5. Dispositif de retenue selon l'une quelconque des revendications précédentes,
**caractérisé en ce**
**qu'**une arête d'appui (36) destinée à servir d'appui à la tête sphérique (14) est prévue sur le bord externe de la gaine (16) de l'articulation.

6. Dispositif de retenue selon l'une quelconque des revendications précédentes,
**caractérisé en ce**
**que** le logement (12) pour l'articulation comporte une butée (28) destinée à servir d'appui à la gaine (16) de l'articulation.

7. Dispositif de retenue selon la revendication 6,
**caractérisé en ce**
**qu'**un joint torique (30) est prévu dans la butée (28).

8. Dispositif de retenue selon l'une quelconque des revendications précédentes,
**caractérisé en ce**
**qu'**un logement pour une vis de fixation (24) est prévu dans la tête sphérique (14).

9. Dispositif de retenue selon la revendication 8,
**caractérisé en ce**
**que** la tête sphérique (14) reçoit la vis de fixation (24) de manière à établir un contact intime.

10. Dispositif de retenue selon l'une quelconque des revendications précédentes,
**caractérisé en ce**
**qu'**une fente (38) dans laquelle est apte à être insérée la vis de fixation (24) ou une saillie (26) montée sur la tête sphérique (14) est prévue dans la gaine (16) de l'articulation.

11. Dispositif de retenue selon l'une quelconque des revendications précédentes,
**caractérisé en ce**
**qu'**une deuxième articulation est prévue sur la pièce d'écartement (10).
